# DEMANDE DE BREVET EUROPEEN

(11) **EP 1 741 598 A1**
(43) Date de publication de la demande: **10.01.2007**
(21) Numéro de dépôt: 06356073.4
(22) Date de dépôt: 20.06.2006
(51) Int. Cl.: B60Q 1/30

(54) **Feu arrière pour véhicule automobile, en particulier pour une remorque de poids lourd**

(30) Priorité: 08.07.2005 FR 0507337
(71) Demandeur: Vignal Systems, 69200 Venissieux (FR)
(72) Inventeur: Pichat, Franck, 69540 Irigny (FR)
(74) Mandataire: Maureau, Philippe

(57) **Abrégé**

Le feu arrière comprend un boîtier renfermant différentes sources lumineuses, destiné à être fixé sur le véhicule, et une glace (1) fermant le boîtier.

La glace comprend une cavité débouchant dans sa face extérieure. La cavité possède une forme présentant un axe de symétrie (11) sensiblement perpendiculaire à la glace et est destinée à recevoir un élément de signalisation passive (23) portant un triangle (32).

En faisant pivoter le feu de 180°, et selon le sens de fixation de l'élément de signalisation passive, on peut obtenir un feu gauche ou un feu droit.

## Description

La présente invention concerne un feu arrière pour véhicule automobile, en particulier pour une remorque de poids lourd.

Le Code de la route impose que les véhicules non motorisés, et notamment les remorques de poids lourds, soient munis à l'arrière d'un triangle réfléchissant.

Afin de satisfaire cette exigence, il est possible d'apposer sur le véhicule un triangle distinct des feux arrières.

Une solution plus pratique consiste à équiper le véhicule de feux arrières incluant un tel triangle. De façon connue, ces feux comprennent ainsi un boîtier fixé sur le véhicule, renfermant différentes sources lumineuses, et une glace fermant le boîtier, dont une zone est réfléchissante et en forme de triangle.

Toutefois, en adoptant cette solution, il n'est plus possible d'obtenir une réversibilité du feu comme c'est le cas des feux non équipés de triangles. En effet, l'ordre des fonctions sur un feu gauche et sur un feu droit doivent être symétriques (par exemple l'indicateur de position à une extrémité du feu, vers l'extérieur du véhicule). Par simple pivotement de 180°, un feu non équipé de triangle peut donc être utilisé indifféremment comme feu arrière gauche ou feu arrière droit. Mais si le feu comporte un triangle intégré, ce pivotement a pour conséquence de retourner le triangle, dont la pointe se retrouve dirigée vers le bas, ce qui n'est pas conforme au Code de la route.

Il est donc nécessaire de réaliser d'une part des feux arrière gauches et d'autre part des feux arrière droits. Ceci présente de nombreux inconvénients, tels que la nécessité de deux moules de glace différents et l'augmentation du volume de stock pour le fabricant et le distributeur. Ces inconvénients sont encore plus pénalisants dans le cas de feux qui ne sont pas produits dans des quantités importantes.

Le document EP 0 049 502 décrit un feu arrière comportant un catadioptre triangulaire, ainsi qu'un premier boîtier de feu disposé d'un côté du catadioptre et un deuxième boîtier de feu disposé de l'autre côté du catadioptre. Les boîtiers de feux sont en forme de trapèze, de sorte que l'ensemble, à l'état monté, présente la forme d'un rectangle dont la surface utile est sensiblement continue. Un tel feu n'est pas réversible. En effet, il est nécessaire de prévoir un premier boîtier de feu spécifique pour être placé du côté gauche du véhicule et un premier boîtier de feu spécifique pour être placé du côté droit du véhicule. Il en va de même pour le deuxième boîtier de feu.

La présente invention vise à remédier aux inconvénients mentionnés ci-dessus, en fournissant un feu arrière qui soit réversible.

A cet effet, l'invention concerne un feu arrière pour véhicule automobile comprenant un boîtier renfermant différentes sources lumineuses, destiné à être fixé sur le véhicule, une glace fermant le boîtier, et un élément de signalisation passive comprenant un triangle réfléchissant. Selon une définition générale de l'invention, la glace comprend une cavité débouchant dans sa face extérieure, ladite cavité possédant une forme présentant un axe de symétrie sensiblement perpendiculaire à la glace, et l'élément de signalisation passive est distinct de la glace et présente une forme et des dimensions complémentaires de celles de la cavité, de sorte que l'élément de signalisation passive puisse être monté dans la cavité dans deux sens différents et, en position montée, combler sensiblement la cavité et affleurer sensiblement la face extérieure de la glace.

Il est ainsi possible de réaliser d'une part un seul type de feu dépourvu de triangle, et donc pouvant être utilisé comme feu gauche ou droit, et d'autre part un seul type d'élément de signalisation passive, de type comprenant un triangle réfléchissant, et de réaliser l'assemblage au dernier moment en fonction des besoins, dans un premier sens ou un deuxième sens correspondant à une rotation de 180°. Les coûts de production et de stockage s'en trouvent grandement diminués.

Avantageusement, la cavité comprend des moyens d'assemblage mécanique destinés à coopérer avec des moyens complémentaires ménagés sur l'élément de signalisation passive. Ces moyens comprennent par exemple une gorge ménagée sur au moins une portion de la périphérie de la cavité et destinée à recevoir un rebord de l'élément de signalisation passive.

Selon une réalisation possible, la cavité comprend un bord supérieur et un bord inférieur sensiblement droits et parallèles et deux bords latéraux formés chacun d'une ligne courbe ou brisée incurvée vers l'intérieur de la cavité.

La paroi formant le fond de la cavité peut être transparente, la cavité étant par exemple située en regard des zones du feu formant feu de position et feu stop.

Il peut par ailleurs être prévu que la cavité soit adjacente à la zone du feu formant indicateur de direction.

L'élément de signalisation passive est par exemple soudé sur la paroi formant le fond de la cavité.

Généralement, le triangle de l'élément de signalisation passive comporte une alternance de lignes transparentes et de lignes de catadioptres sensiblement parallèles à la base du triangle.

Selon un deuxième aspect, l'invention concerne un élément de signalisation passive destiné à être monté sur la glace d'un feu arrière d'un véhicule automobile, comprenant un triangle réfléchissant, et possédant une paroi principale sensiblement plane dont le contour présente un axe de symétrie sensiblement perpendiculaire à ladite paroi principale. Ainsi, l'élément de signalisation passive peut être indifféremment monté sur la glace dans un premier sens ou, après pivotement de 180° autour de son axe de symétrie, dans un deuxième sens.

On décrit à présent, à titre d'exemple non limitatif, une forme de réalisation possible de l'invention, en référence aux figures annexées :
La figure 1 est une vue en élévation de la face extérieure d'une glace destinée à fermer le boîtier d'un feu arrière selon l'invention ;
La figure 2 est une vue partielle en coupe de la glace, selon la ligne II-II de la figure 1 ;
La figure 3 est une vue en coupe de la glace, selon la ligne III-III de la figure 1 ;
La figure 4 est une vue en perspective de l'élément de signalisation passive ;
Les figures 5 et 6 sont des vues en élévation respectivement de la face extérieure et de la face intérieure de l'élément de la figure 4,
La figure 7 est une vue en élévation de la face extérieure d'une glace de feu arrière gauche équipée de l'élément de la figure 4 ;
La figure 8 est une vue partielle en coupe de la glace et de l'élément, selon la ligne VIII-VIII de la figure 7 ; et
La figure 9 est une vue en élévation de la face extérieure d'une glace de feu arrière droit équipée de l'élément de la figure 4 .

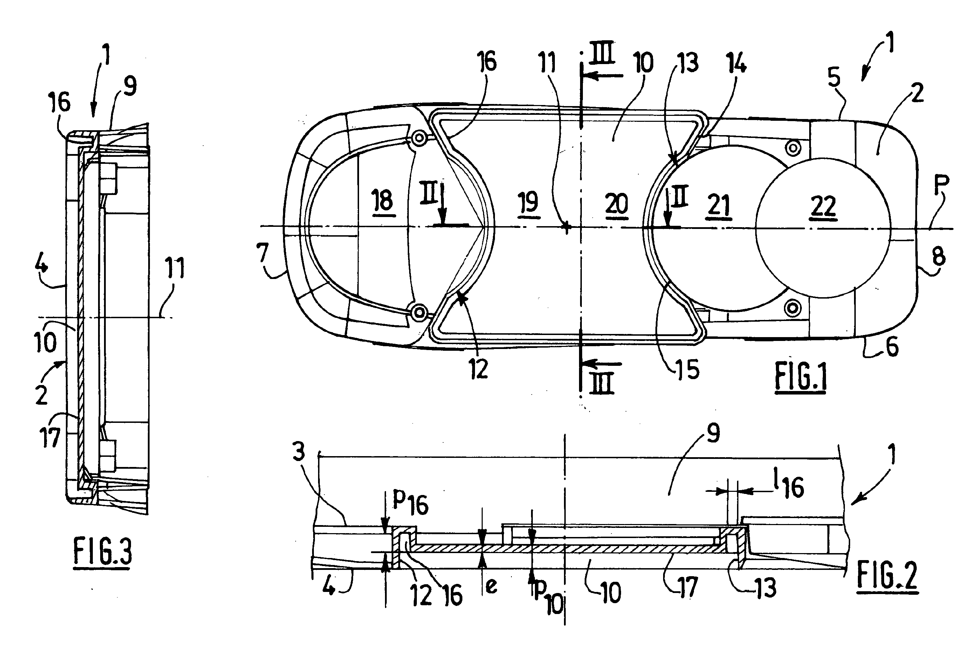

La figure 1 représente une glace 1 destinée à fermer un boîtier de feu arrière de véhicule automobile, en particulier de remorque de poids lourd. Le boîtier (non représenté) renferme différentes sources lumineuses (lampes à incandescence ou diodes électroluminescentes) associées à des systèmes d'alimentation et à des systèmes optiques de répartition des rayons lumineux. Le boîtier comprend également des dispositifs de fixation sur la carrosserie d'un véhicule.

La glace 1 est réalisée en matière plastique par moulage. Elle comprend une paroi principale 2 sensiblement rectangulaire comportant une face intérieure 3 et une face extérieure 4, et présentant un bord supérieur 5, un bord inférieur 6 ainsi qu'un premier et un deuxième bords latéraux 7, 8. La glace 1 comprend également un rebord périphérique 9 qui s'étend depuis la face intérieure 3 et est destiné à coopérer avec le boîtier. La glace 1 présente un plan de symétrie P sensiblement orthogonal à la paroi principale 2 et parallèle aux bords 5, 6.

Pour plus de commodité, on décrit la glace 1 dans la position de la figure 1, où les bords 5 et 6 sont sensiblement horizontaux (ce qui correspond à la position montée sur le véhicule), le bord 5 étant au-dessus du bord 6. Mais, comme on le verra ci-après, la glace peut être pivotée de 180°.

La glace 1 comprend une cavité 10 débouchant dans sa face extérieure 4. La cavité 10 présente la forme d'un enfoncement localisé de la paroi principale 2, cette dernière présentant une épaisseur e sensiblement constante de l'ordre de 1,5 à 2 mm. La cavité 10 est située dans la zone médiane de la glace 1, mais non centrée par rapport aux bords latéraux 7, 8 et s'étend verticalement du bord supérieur 5 au bord inférieur 6.

La cavité 10 présente un axe de symétrie 11 orthogonal à la paroi principale 2. Elle est limitée par deux bords latéraux 12, 13 présentant chacun deux portions d'extrémité rectilignes 14 dirigées vers l'intérieur de la cavité 10, et une portion en arc de cercle 15 incurvée vers l'intérieur de la cavité 10.

A la périphérie de la cavité 10 est ménagée une gorge 16, en retrait par rapport à la paroi de fond 17 sensiblement plane de la cavité 10. A titre d'exemple, la profondeur p10 de la cavité 10 (distance entre le fond 17 et la face extérieure 4 de la glace 1) et la profondeur p16 de la gorge 16 (distance entre le fond de la gorge 16 et le fond 17 de la cavité 10) sont de l'ordre de 4 à 7 mm. La largeur ℓ16 de la gorge 16 est comprise entre 2 et 3 mm.

La glace 1, et en particulier la paroi de fond 17 de la cavité 10, est transparente, et peut être divisée en plusieurs zones placées chacune en regard d'une source lumineuse et remplissant une fonction distincte. Du premier bord latéral 7 au deuxième bord latéral 8, on a ainsi :
- une zone 18 correspondant à l'indicateur de position, située entre le premier bord latéral 7 et la cavité 10 ;
- une zone 19 correspondant au feu stop et une zone 20 correspondant au feu de position, toutes deux au niveau de la cavité 10 ;
- une zone 21, ici en forme de croissant, correspondant au feu de recul ; et
- une zone 22, par exemple en forme de disque, correspondant au feu de brouillard.

La coloration correspondant à chacune des fonctions est réalisée sur les sources lumineuses et/ou sur la glace1.

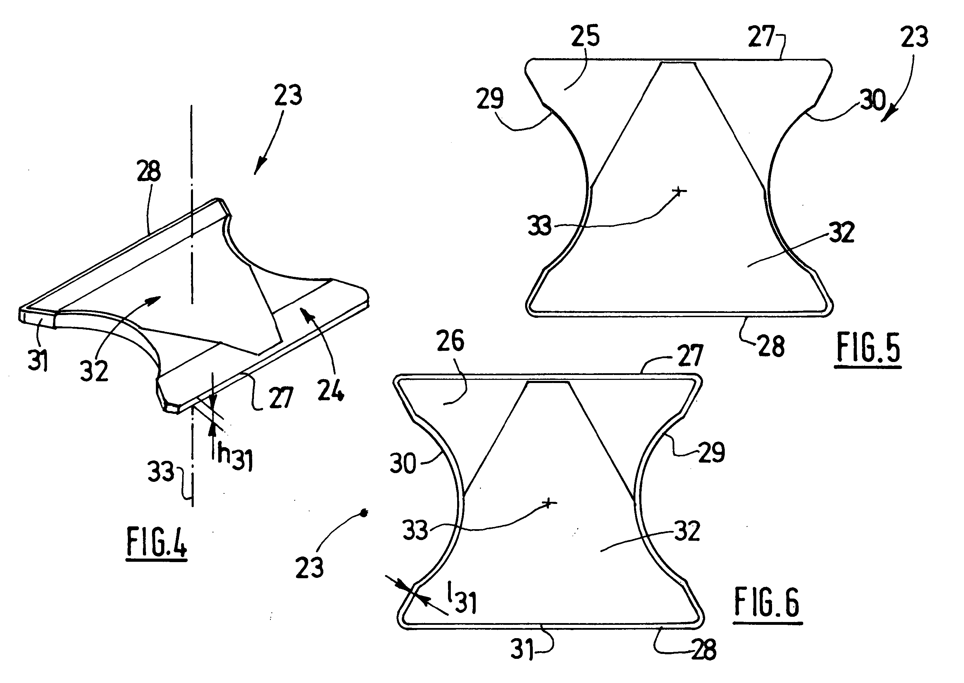

Sur les figures 4 à 6 est représenté un élément 23 de signalisation passive réalisé en matière plastique et destiné à être associé à la glace 1.

L'élément 23 comprend une paroi principale 24 sensiblement plane de forme et de dimensions complémentaires de celles de la cavité 10. La paroi principale 24 présente ainsi une face intérieure 25 et une face extérieure 26 sensiblement planes, un bord supérieur 27 et un bord inférieur 28 rectilignes ainsi qu'un premier et un deuxième bords latéraux 29, 30 sensiblement identiques aux bords latéraux 12, 13 de la cavité 10. L'élément 23 comprend également un rebord périphérique 31 qui s'étend sensiblement perpendiculairement depuis la face intérieure 25. Le contour de la paroi principale 24 présente un axe de symétrie 33 sensiblement perpendiculaire à ladite paroi principale 24. Enfin, la paroi principale 24 comprend un triangle 32 comportant une alternance de lignes transparentes et de lignes de catadioptres sensiblement parallèles à sa base, formée par le bord inférieur 28.

L'élément 23 est destiné à être associé à la glace 1. Pour ce faire, le rebord 31 de l'élément 23 est inséré dans la gorge 16 de la glace jusqu'à venir sensiblement en contact avec le fond de cette gorge 16. Puis l'élément 23 est soudé contre le fond 17 de la cavité 10. Les axes de symétrie 11 de la glace et 33 de l'élément de signalisation passive sont alors sensiblement confondus.

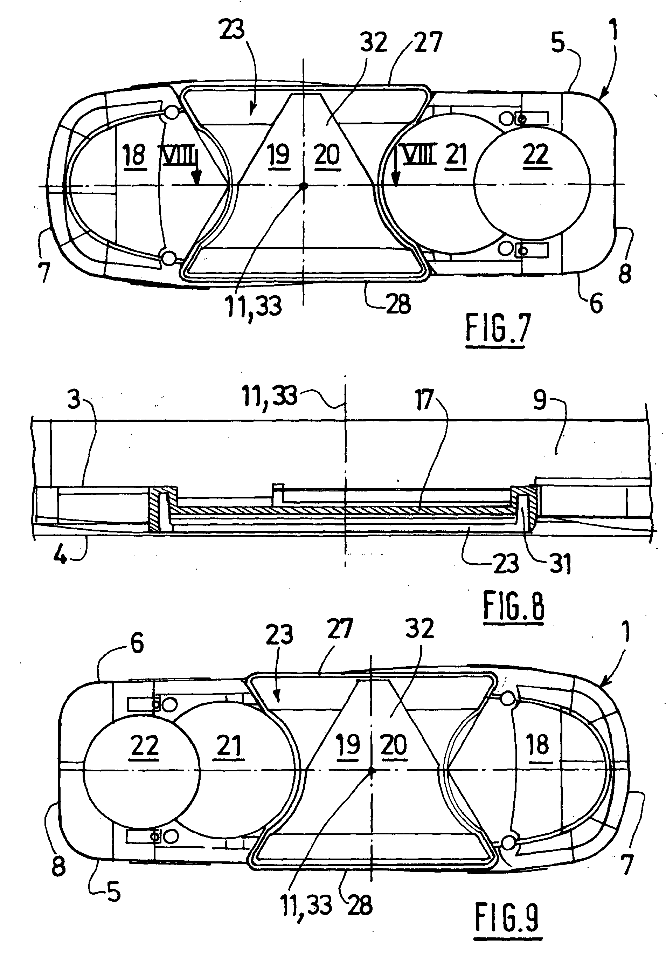

Les dimensions de l'élément 23, et notamment du rebord 31 (largeur ℓ31 de l'ordre de 1 à 2 mm, hauteur h31 de l'ordre de 12 à 14 mm) sont adaptées d'une part pour permettre la mise en place de l'élément 23 dans la cavité 10 et, d'autre part, faire en sorte que l'élément 23, une fois placé dans la cavité 10, comble sensiblement la cavité 10 et affleure sensiblement la face extérieure 4 de la glace 1, comme illustré sur la figure 8.

En plaçant l'élément 23 dans un sens tel que son bord supérieur 27 soit en regard du bord supérieur 5 de la glace 1, on obtient une glace de feu arrière gauche de véhicule, comme illustré sur la figure 7.

A l'inverse, si l'on place l'élément 23 de telle sorte que son bord supérieur 27 soit en regard du bord inférieur 6 de la glace 1, on obtient une glace de feu arrière droit de véhicule, comme illustré sur la figure 9. Il ne s'agit pas uniquement de pivoter la glace 1 de 180°, mais également de placer l'élément 23 en sens inverse, afin que le triangle ait toujours la pointe en haut.

L'invention permet donc d'obtenir un feu arrière gauche ou droit conforme, de façon facile et rapide, permettant ainsi de répondre efficacement à la demande des clients, et ce avec un coût et un volume de stockage réduits. En particulier, il est possible pour le distributeur de personnaliser le feu au dernier moment.

Il va de soi que l'invention n'est pas limitée à la forme de réalisation décrite ci-dessus à titre d'exemple mais qu'elle en embrasse au contraire toutes les variantes de réalisation.

## Revendications

1. Feu arrière pour véhicule automobile, comprenant un boîtier renfermant différentes sources lumineuses, destiné à être fixé sur le véhicule, une glace (1) fermant le boîtier, et un élément de signalisation passive (23) comprenant un triangle (32) réfléchissant, **caractérisé en ce que** la glace (1) comprend une cavité (10) débouchant dans sa face extérieure (4), ladite cavité (10) possédant une forme présentant un axe de symétrie (11) sensiblement perpendiculaire à la glace (1), et **en ce que** l'élément de signalisation passive (23) est distinct de la glace (1) et présente une forme et des dimensions complémentaires de celles de la cavité (10), de sorte que l'élément de signalisation passive (23) puisse être monté dans la cavité (10) dans deux sens différents et, en position montée, combler sensiblement la cavité (10) et affleurer sensiblement la face extérieure (4) de la glace (1).

2. Feu selon la revendication 1, **caractérisé en ce que** la cavité (10) comprend des moyens d'assemblage mécanique (16) destinés à coopérer avec des moyens complémentaires (31) ménagés sur l'élément de signalisation passive (23).

3. Feu selon la revendication 2, **caractérisé en ce que** les moyens d'assemblage mécanique comprennent une gorge (16) ménagée sur au moins une portion de la périphérie de la cavité (10) et destinée à recevoir un rebord (31) de l'élément de signalisation passive (23).

4. Feu selon l'une des revendications 1 à 3, **caractérisé en ce que** la cavité (10) comprend un bord supérieur et un bord inférieur sensiblement droits et parallèles et deux bords latéraux (12, 13) formés chacun d'une ligne courbe ou brisée incurvée vers l'intérieur de la cavité (10).

5. Feu selon l'une des revendications 1 à 4, **caractérisé en ce que** la paroi formant le fond (17) de la cavité (10) est transparente.

6. Feu selon l'une des revendications 1 à 5, **caractérisé en ce que** la cavité (10) est située en regard des zones du feu formant feu de position (20) et feu stop (19).

7. Feu selon l'une des revendications 1 à 6, **caractérisé en ce que** la cavité (10) est adjacente à la zone du feu formant indicateur de direction (18).

8. Feu selon l'une des revendications 1 à 7, **caractérisé en ce que** l'élément de signalisation passive (23) est soudé sur la paroi formant le fond (17) de la cavité (10).

9. Feu selon l'une des revendications 1 à 8, **caractérisé en ce que** le triangle (32) de l'élément de signalisation passive (23) comporte une alternance de lignes transparentes et de lignes de catadioptres sensiblement parallèles à la base (28) du triangle (32).

10. Elément de signalisation passive destiné à être monté sur la glace (1) d'un feu arrière d'un véhicule automobile, comprenant un triangle (32) réfléchissant, **caractérisé en ce qu'**il possède une paroi principale (24) sensiblement plane dont le contour présente un axe de symétrie (33) sensiblement perpendiculaire à ladite paroi principale (24).
